# EUROPEAN PATENT SPECIFICATION

(11) **EP 0 947 109 B1**
(45) Date of publication and mention of the grant of the patent: **16.06.2004**
(21) Application number: 97950481.8
(22) Date of filing: 12.12.1997
(51) Int. Cl.: H04Q 7/18

(54) **PROGRAMMABLE PAGING UNIT**
PROGRAMMIERBARE RUFEMPFÄNGEREINHEIT
UNITE PROGRAMMABLE DE RECHERCHE DE PERSONNES

(30) Priority: 18.12.1996 NL 1004819
(43) Date of publication of application: 06.10.1999
(73) Proprietor: Telefonaktiebolaget LM Ericsson (publ), 164 83 Stockholm (SE)
(72) Inventor: SLOT, Gerrit, NL-7691 CD Bergentheim (NL)
(74) Representative: van der Arend, Adrianus G.A., Ir.
(86) International application number: PCT/NL1997/000686
(87) International publication number: WO 1998/027756

(56) References cited:
- WO-A-88/05247
- WO-A-90/14646
- WO-A-92/04805
- US-A- 4 839 628
- WRIGHT J A: "PROGRAMMERLESS CODE PLUG PROGRAMMING" MOTOROLA TECHNICAL DEVELOPMENTS., vol. 10, March 1990, SCHAUMBURG, ILLINOIS US, page 45/46 XP000114637

## Description

The invention relates to a paging unit, comprising a receiving circuit, an aerial connected to the receiving circuit, a central processing circuit connected to the receiving circuit, input means connected to the processing circuit, output means connected to the processing circuit and memory means connected to the processing circuit, the receiving circuit being suitable for receiving a radio signal via the aerial, demodulating the radio signal and supplying a call signal or call corresponding to the demodulated radio signal to the processing circuit, the processing circuit comparing an address present in the call with one or more addresses which are stored in the memory means and assigned to the unit and, in the event of coincidence, storing data present in the call in the memory means and controlling the output means as a function of commands inputted via the input means.

A paging unit of this type is generally known, e.g. from Patent document US-A-4 839 628. Such a paging unit has the disadvantage that its use is essentially limited to a call function comprising receiving, according to a transmission code scheme, which may or may not be selectable, storing and presenting data present in messages received and/or for notifying their receipt. Such data can be referred to as transparent data.

The object of the invention is to eliminate the drawbacks of the known paging unit.

This object is achieved by means of the paging unit as described in claim 1.

The paging unit according to the invention is programmable and reprogrammable so as to operate in accordance with numerous different applications or functions, whether or not already known, added to the call function. The call function, in particular the calling of the user of the unit, can even be subordinated and put out of action. For possible applications, only one physical embodiment of the paging unit is necessary. The paging unit is consequently very widely applicable and cheap.

Other properties and advantages of the invention will emerge from the explanation of the drawings which follows below. In the drawings:
Figure 1 shows a block diagram of a paging unit according to the invention; and
Figure 2 shows a flow chart of an operation of the paging unit shown in Figure 1.

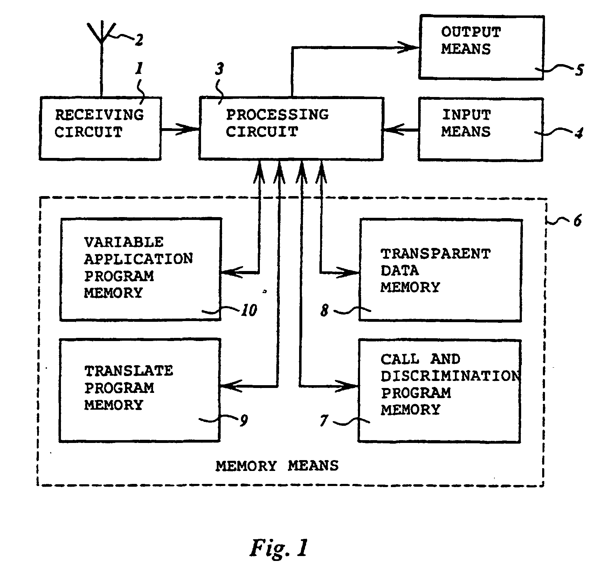

The paging unit shown in Figure 1 comprises a receiving circuit 1 which is suitable for receiving a radio signal from an aerial 2, demodulating the received radio signal and supplying a digital output signal corresponding to the demodulated radio signal to a central processing circuit 3. The processing circuit 3 is connected to input means 4, output means 5 and memory means 6. The memory means comprise a call and discrimination program memory 7, a transparent data memory 8, a translate program memory 9 and a variable application program memory 10.

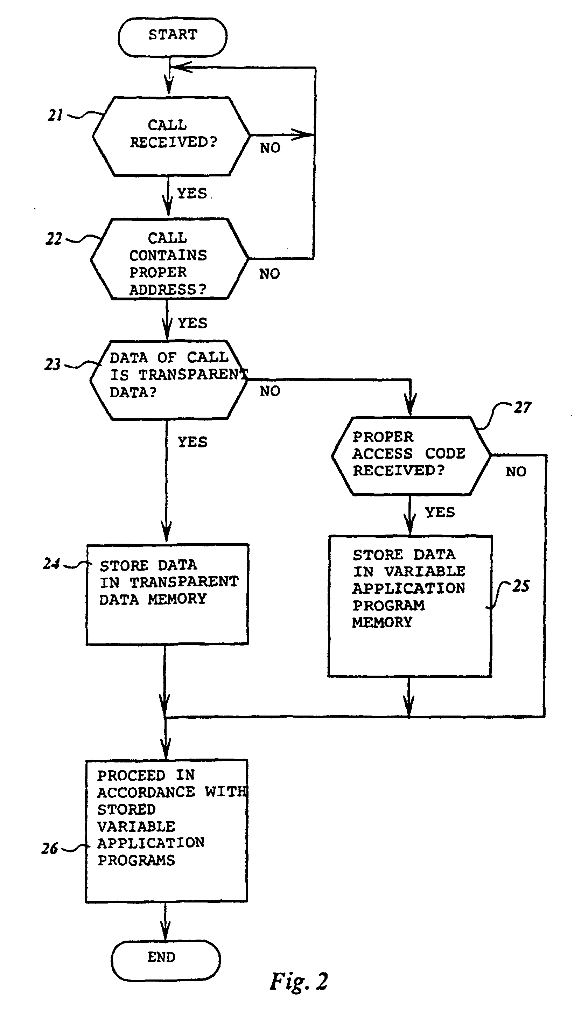

The operation of the paging unit shown in Figure 1 will be explained by reference to the flow chart of Figure 2. The digital output signal of the receiving circuit 1 can be regarded as a call signal, or call for short, which contains an address assigned to one or more paging units and a message or data (block 21). The processing circuit 3 processes a received call in the first instance in accordance with an initial call processing program stored in the call and discrimination program memory 7. In a memory, for example the transparent data memory 8, one or more individual addresses and/or group addresses assigned to the paging unit are stored. If, on receiving a call in accordance with the initial call processing program, the processing circuit 3 detects an address in the received call which is identical to an address stored in the memory 8, the received call is regarded as intended for the present paging unit (block 22). If no call is received or if no call having a correct address, that is to say an address assigned to the paging unit, is received, such a call is awaited (return to block 21).

After the processing circuit 3 has detected a correct address (block 22) in the received call (block 21), it checks it by means of the program stored in the memory 7 whether the data present in the call is transparent data (block 23). Transparent data is understood as meaning data which does not need to undergo any processing and/or can in fact set the paging unit to another state, for example alarm state, but is not capable of altering the operation of the paging unit as specified by means of the program in the memory 7. If the received data is transparent data, the processing circuit 3 stores it in the transparent data memory 8 (block 24). Depending on commands given by a user of the paging unit by means of the input means 4, the received transparent data may or may not immediately be presented to the user in a tangible way (by means of a vibration device) and/or audible way and/or visual way.

Apart from the step in which the processing circuit 3 makes a distinction between whether or not data is transparent (block 23), the explanation given above is applicable to a generally known paging unit.

In addition to the discrimination function (block 23) of the call and discrimination program stored in the memory 7, the paging unit comprises, according to the invention, the translate program memory 9 and the variable application program memory 10. If the processing circuit 3 has established that the data of a received call is not transparent data (block 23), the processing circuit 3 stores said data in the variable application program memory 10 (block 25). The data stored in the memory 10 represents one or more application programs which are received by means of one or more calls containing nontransparent data. The translate program memory 9 contains a translate program ("interpreter") which is suitable for translating instructions and data of any of the application programs stored in the memory 10 into a form suitable for the processing circuit 3. After processing a call, whether it contains transparent data or not, the operation of the paging unit, in particular that of the processing circuit 3, proceeds in accordance with not only the program stored in the memory 7, but also in accordance with variable application programs stored in the memory 10 (block 26). Data needed for a variable application program can be stored in the memory 10 and/or in the transparent data memory 8.

Depending on commands given by the application program or by application programs already stored earlier in the memory 10 or by the user via the input means 4, an application program stored in the memory 10 can be activated.

Because the memory 10 may contain one or more application programs which can be repeatedly altered, replaced or supplemented by means of one or more calls, the paging unit according to the invention can easily be made suitable for operating according to a number of applications. Said applications may be specific for one or more individuals and/or operating objects. Examples of application programs are game programs, such as a personal electronic "cuddly toy" ("Tamagotchi"), analysis and graphical presentation of figures received as transparent data, such as stock exchange quotations and process measurement values, and a stop watch. Some programs coupled to a call address of the unit could be transmitted only against payment. For example, after the "death" of the cuddly toy, the application program could put itself out of action and the user would first have to pay for a desired new "toy". The games program could be reactivated by means of a further application program then transmitted, which may be small. The operator of the transmitter could even settle in this example for the standard incomes from making a call, which may stimulate the use of such programs and, therefore, the generation of incomes from calls made. These and other applications can be implemented by means of a single physical embodiment of the paging unit according to the invention. As a result, appreciable savings may be made on the costs of production, storage and sales price.

The calls can be transmitted in a known manner from a centre, which may be connected via telephone connections to a data input unit, which may be a telephone set or a computer. For the application of the paging unit according to the invention it is therefore not necessary to make changes at the transmitting end as long as the data input equipment is suitable for the input of data recognizable as nontransparent data. To apply the paging unit in existing systems, it may be stipulated that, if the processing circuit 3 recognizes in the data of a call an item of data or a plurality of items of data having a specific structure (values or value combination), the actual call and/or a subsequent call contains nontransparent data (or vice versa).

In order to prevent, particularly in a public call system ("wide area paging", WAP), unauthorized individuals from altering the content of the variable application program memory 10, the program stored in the call and discrimination program memory 7 preferably comprises a function with which the processing circuit 3 checks, on receiving nontransparent data, whether a correct access code has been or is being received (block 27). The access code can be received at the same time as the call containing the nontransparent data or as transparent data in an earlier call (or later confirmation call). The access code and the associated nontransparent data can be enciphered, for example using an RSA encryption algorithm. In the event of encryption, the access code does not have to be individually recognizable after the data have been deciphered, but may be concealed in the fact that the deciphering of the data must yield processable data. Nevertheless, the deciphered data may also contain a separate access code which specifies, for example, a sender to be verified by the paging unit. The call processing program stored in the memory 7 or a variable application program stored at some time in the memory 10 may be suitable for altering the checking process for such an inherent or added access code.

The memory means 6 can be designed in various ways. The memories 7 and 9 are, for example, read only memories (ROMs), the memory 8 is, for example, a volatile memory (RAM) and the memory 10 is, for example, a nonvolatile, rewritable memory (EEPROM or flash memory). The memory means 6 may also be composed of a single nonvolatile, rewritable memory.

## Claims

1. Paging unit, comprising a receiving circuit (1), an aerial (2) connected to the receiving circuit (1), a central processing circuit (3) connected to the receiving circuit (1), input means (4) connected to the processing circuit (3), output means (5) connected to the processing circuit (3) and memory means (6) connected to the processing circuit (3), the receiving circuit (1) being suitable for receiving a radio signal via the aerial (2), demodulating the radio signal and supplying a call signal or call corresponding to the demodulated radio signal to the processing circuit (3), the processing circuit (3) comparing an address present in the call with one or more addresses which are stored in the memory means (6) and assigned to the unit and, in the event of coincidence, storing data present in the call in the memory means (6) and controlling the output means (5) as a function of commands inputted via the input means (4) **characterized in that** the processing circuit (3) is adapted to distinguish transparent and nontransparent data in the call in accordance with a discrimination instruction, on receiving transparent data, the processing circuit (3) is adapted to store the data in a transparent data memory (8) of the memory means (6) on receiving nontransparent data, the processing circuit (3) is adapted to store the data in a variable application program memory (10) of the memory means (6), data stored in the variable application program memory (10) representing one or more variable application programs, the memory means (6) comprise a translate program memory (9) in which a translation program is stored which is adapted to translate instructions of a type such as of an application program, and after receiving and processing a call, the processing circuit (3) proceeds with an operation which is, in addition, in accordance with one or more activated application programs.

2. Paging unit according to claim 1, **characterized in that** the processing circuit (3) is adapted to immediately activate a most recently received application program.

3. Paging unit according to claim 1, **characterized in that** the processing circuit (3) is adapted to activate an application program depending on the operation of another application program.

4. Paging unit according to claim 1, **characterized in that** the processing circuit (3) is adapted to activate an application program in accordance with commands received via the input means (4).

5. Paging unit according to one of the preceding claims, **characterized in that** the processing circuit (3) is adapted to compare one or more items of data of a call with a predetermined structure and, depending on the comparison result, decides whether the data received are transparent or nontransparent data.

6. Paging unit according to claim 5, **characterized in that**, on receiving the one or more items of data with the specific structure, the processing circuit (3) is adapted to process data of a subsequent call as nontransparent data.

7. Paging unit according to one of the preceding claims, **characterized in that** one or more items of data of a call represent(s) an access code, the processing circuit (3) is adapted to check the access code and only if a correct access code is received, does the processing circuit (3) store received nontransparent data in the variable application program memory (10).

8. Paging unit according to claim 7, **characterized in that**, on receiving a correct access code, the processing circuit (3) is adapted to store nontransparent data of a subsequent call in the variable application program memory (10).

## Patentansprüche

1. Personenrufeinheit bzw. Pager, mit einer Empfängerschaltung (1), einer mit der Empfängerschaltung (1) verbundenen Antenne (2), einer mit der Empfängerschaltung (1) verbundenen zentralen Verarbeitungsschaltung (3), mit der Verarbeitungsschaltung (3) verbundenen Eingabemitteln (4), mit der Verarbeitungsschaltung (3) verbundenen Ausgabemitteln (5) und mit der Verarbeitungsschaltung (3) verbundenen Speichermitteln (6), wobei die Empfängerschaltung (1) über die Antenne (2) ein Funksignal empfangen kann, das Funksignal demodulieren kann und ein Anrufsignal oder einen Anruf, der dem demodulierten Funksignal entspricht, an die Verarbeitungsschaltung (3) liefern kann, wobei die Verarbeitungsschaltung (3) eine in dem Anruf vorhandene Adresse mit einer oder mit mehreren Adressen vergleicht, die in den Speichermitteln (6) gespeichert und der Einheit zugewiesen sind, und im Falle einer Übereinstimmung die in dem Anruf vorhandenen Daten in den Speichermitteln (6) speichert und die Ausgabemittel (5) in Abhängigkeit von Befehlen, die über die Eingabemittel (4) eingegeben werden, steuert, **dadurch gekennzeichnet, dass** die Verarbeitungsschaltung (3) so beschaffen ist, dass sie in Übereinstimmung mit einem Unterscheidungsbefehl transparente und nicht transparente Daten in dem Anruf unterscheidet, die Verarbeitungsschaltung (3) so beschaffen ist, dass sie bei Empfang transparenter Daten die Daten in einem Speicher (8) für transparente Daten der Speichermittel (6) speichert, die Verarbeitungsschaltung (3) so beschaffen ist, dass sie bei Empfang nicht transparenter Daten die Daten in einem Speicher (10) für unterschiedliche bzw. veränderliche Anwendungsprogramme der Speichermittel (6) speichert, wobei die in dem Speicher (10) für unterschiedliche bzw. veränderliche Anwendungsprogramme gespeicherten Daten ein oder mehrere unterschiedliche bzw, veränderliche Anwendungsprogramme repräsentieren, wobei die Speichermittel (6) einen Übersetzungsprogrammspeicher (9) enthalten, in dem ein Übersetzungsprogramm gespeichert ist, das so beschaffen ist, dass es Befehle eines Typs wie etwa eines Anwendungsprogramms übersetzt, und die Verarbeitungsschaltung (3) nach dem Empfangen und Verarbeiten eines Anrufs zu einer Operation übergeht, die zusätzlich mit einem oder mehreren aktivierten Anwendungsprogrammen in Übereinstimmung ist.

2. Personenrufeinheit bzw. Pager nach Anspruch 1, **dadurch gekennzeichnet, dass** die Verarbeitungsschaltung (3) so beschaffen ist, dass sie sofort ein zuletzt empfangenes Anwendungsprogramm aktiviert.

3. Personenrufeinheit bzw. Pager nach Anspruch 1, **dadurch gekennzeichnet, dass** die Verarbeitungsschaltung (3) so beschaffen ist, dass sie ein Anwendungsprogramm in Abhängigkeit von der Operation eines weiteren Anwendungsprogramms aktiviert.

4. Personenrufeinheit bzw. Pager nach Anspruch 1, **dadurch gekennzeichnet, dass** die Verarbeitungsschaltung (3) so beschaffen ist, dass sie ein Anwendungsprogramm in Übereinstimmung mit Befehlen aktiviert, die über die Eingabemittel (4) empfangen werden.

5. Personenrufeinheit bzw. Pager nach einem der vorhergehenden Ansprüche, **dadurch gekennzeichnet, dass** die Verarbeitungsschaltung (3) so beschaffen ist, dass sie ein oder mehrere Datenelemente eines Anrufs mit einer vorgegebenen Struktur vergleicht und in Abhängigkeit vom Vergleichsergebnis entscheidet, ob die empfangenen Daten transparente oder nicht transparente Daten sind.

6. Personenrufeinheit bzw. Pager nach Anspruch 5, **dadurch gekennzeichnet, dass** die Verarbeitungsschaltung (3) so beschaffen ist, dass sie dann, wenn sie ein oder mehrere Datenelemente mit der bestimmten Struktur empfängt, verarbeitete Daten eines nachfolgenden Anrufs als nicht transparente Daten verarbeitet.

7. Personenrufeinheit bzw. Pager nach einem der vorhergehenden Ansprüche, **dadurch gekennzeichnet, dass** ein oder mehrere Datenelemente eines Anrufs einen Zugriffscode repräsentiert (repräsentieren), wobei die Verarbeitungsschaltung (3) so beschaffen ist, dass sie den Zugriffscode prüft und die Verarbeitungsschaltung (3) nur dann, wenn ein korrekter Zugriffscode empfangen wird, empfangene nicht transparente Daten in dem Speicher (10) für unterschiedliche Anwendungsprogramme speichert.

8. Personenrufeinheit bzw. Pager nach Anspruch 7, **dadurch gekennzeichnet, dass** die Verarbeitungsschaltung (3) so beschaffen ist, dass sie bei Empfang eines korrekten Zugriffscodes nicht transparente Daten eines anschließenden Anrufs in dem Speicher (10) für unterschiedliche Anwendungsprogramme speichert.

## Revendications

1. Unité de radiomessagerie, comprenant un circuit de réception (1), une antenne (2) connectée au circuit de réception (1), un circuit de traitement central (3) connecté au circuit de réception (1), des moyens d'entrée (4) connectés au circuit de traitement (3), des moyens de sortie (5) connectés au circuit de traitement (3) et des moyens formant mémoire (6) connectés au circuit de traitement (3), le circuit de réception (1) étant adapté pour recevoir un signal radio par l'intermédiaire de l'antenne (2), démoduler le signal radio et délivrer un signal d'appel ou un appel correspondant au signal radio démodulé au circuit de traitement (3), le circuit de traitement (3) comparant une adresse présente dans l'appel avec une ou plusieurs adresses qui sont mémorisées dans les moyens formant mémoire (6) et attribuées à l'unité et, dans le cas d'une coïncidence, mémorisant les données présentes dans l'appel dans les moyens formant mémoire (6) et commandant les moyens de sortie (5) en fonction de commandes entrées par l'intermédiaire des moyens d'entrée (4), **caractérisée en ce que** le circuit de traitement (3) est adapté pour distinguer des données transparentes et non transparentes dans l'appel conformément à une instruction de discrimination, lors de la réception de données transparentes, le circuit de traitement (3) est adapté pour mémoriser les données dans une mémoire de données transparentes (8) des moyens formant mémoire (6), lors de la réception de données non transparentes, le circuit de traitement (3) est adapté pour mémoriser les données dans une mémoire de programme d'application variable (10) des moyens formant mémoire (6), les données mémorisées dans la mémoire de programme d'application variable (10) représentant un ou plusieurs programmes d'application variables, les moyens formant mémoire (6) comprennent une mémoire de programme de transformation (9) dans laquelle un programme de transformation qui est adapté pour transformer des instructions d'un type tel qu'un programme d'application est mémorisé, et après la réception et le traitement d'un appel, le circuit de traitement (3) exécute une opération qui est, de plus, conforme à un ou plusieurs programmes d'application activés.

2. Unité de radiomessagerie selon la revendication 1, **caractérisée en ce que** le circuit de traitement (3) est adapté pour activer immédiatement un programme d'application reçu en dernier.

3. Unité de radiomessagerie selon la revendication 1, **caractérisée en ce que** le circuit de traitement (3) est adapté pour activer un programme d'application en fonction du fonctionnement d'un autre programme d'application.

4. Unité de radiomessagerie selon la revendication 1, **caractérisée en ce que** le circuit de traitement (3) est adapté pour activer un programme d'application en fonction de commandes reçues par l'intermédiaire des moyens d'entrée (4).

5. Unité de radiomessagerie selon l'une des revendications précédentes, **caractérisée en ce que** le circuit de traitement (3) est adapté pour comparer un ou plusieurs éléments de données d'un appel avec une structure prédéterminée et, en fonction du résultat de la comparaison, décide si les données reçues sont des données transparentes ou non transparentes.

6. Unité de radiomessagerie selon la revendication 5, **caractérisée en ce que**, lors de la réception desdits un ou plusieurs éléments de données avec la structure spécifique, le circuit de traitement (3) est adapté pour traiter les données d'un appel suivant en tant que données non transparentes.

7. Unité de radiomessagerie selon l'une des revendications précédentes, **caractérisée en ce qu'**un ou plusieurs éléments de données d'un appel représentent un code d'accès, le circuit de traitement (3) est adapté pour vérifier le code d'accès et, uniquement si un code d'accès correct est reçu, le circuit de traitement (3) mémorise les données non transparentes reçues dans la mémoire de programme d'application variable (10).

8. Unité de radiomessagerie selon la revendication 7, **caractérisée en ce que**, lors de la réception d'un code d'accès correct, le circuit de traitement (3) est adapté pour mémoriser les données non transparentes d'un appel suivant dans la mémoire de programme d'application variable (10).
